# FASCICULE DE BREVET EUROPEEN

(11) **EP 0 916 332 B1**
(45) Date de publication et mention de la délivrance du brevet: **12.02.2003**
(21) Numéro de dépôt: 98390015.0
(22) Date de dépôt: 04.11.1998
(51) Int. Cl.: A61H 23/04, F16K 31/06

(54) **Appareil de massage de parties du corps humain par pressions cycliques**
Vorrichtung zum Massieren des Körpers durch zyklische Druckeinwirkung
Apparatus for massaging parts of the body by cyclical application of pressure

(30) Priorité: 17.11.1997 FR 9714360
(43) Date de publication de la demande: 19.05.1999
(73) Titulaire: Medic Systems Société à Responsabilité Limitée, 31500 Toulouse (FR)
(72) Inventeur: Frajdenrajch, Jean, 31000 Toulouse (FR)
(74) Mandataire: Cabinet BARRE LAFORGUE & associés

(56) Documents cités:
- EP-A- 0 302 767
- EP-A- 0 327 879
- WO-A-93/17650
- US-A- 3 862 629
- US-A- 5 067 688
- US-A- 5 186 163

## Description

L'invention concerne un appareil de massage de parties du corps humain par pressions cycliques permettant d'assurer un massage le long de la ou des parties traitées.

On connaît de nombreux appareils de massage destinés au traitement de la stase veineuse et/ou lymphatique et à la réduction d'oedèmes, qui comprennent un accessoire de traitement (cuissarde, ceinture abdominale, ...) appelé à entourer la partie du corps à traiter d'un patient pour réaliser sur celle-ci une succession de compressions locales. Cet accessoire est généralement composé d'une pluralité de cellules gonflables juxtaposées qui sont successivement gonflées puis dégonflées selon un cycle défini. A l'heure actuelle deux solutions techniques sont proposées pour assurer le gonflage et le dégonflage successifs des cellules gonflables.

Selon une première technique, les cellules gonflables sont reliées par un faisceau de conduits à une installation de distribution d'air comprenant un distributeur rotatif ou à tiroirs, ou une pluralité d'électrovannes, cette installation étant apte à délivrer successivement la pression pneumatique vers chaque cellule à travers le conduit qui lui est associé. Des appareils réalisés selon ce principe sont notamment décrits dans les brevets FR 2.511.241, FR 2.405.708, US 4.311.135, US 3.167.067, GB 2.062.235, GB 483.111, GB 2.077.108 et DE 2.753.523. De tels appareils initialement dotés d'un accessoire de traitement composé de cellules placées côte à côte et d'un compresseur adapté pour gonfler successivement ces cellules selon un ordre immuable, de la cellule distale vers la cellule proximale ont, en outre, fait l'objet de plusieurs perfectionnements techniques visant à accroître leurs performances.

Un premier perfectionnement, décrit notamment dans le brevet DE 2.753.526 a ainsi consisté à réaliser des accessoires de traitement présentant des cellules gonflables en semi-superposition et non plus juxtaposées. Cette disposition des cellules a permis, en effet, de corriger le défaut de fractionnement des oedèmes obtenu avec des cellules juxtaposées et résultant du fait qu'aucune pression n'était exercée entre les différentes cellules.

Un deuxième perfectionnement rendu possible grâce à l'évolution de la technologie des micro-contrôleurs, a quant à lui consisté à réaliser des appareils de massage assistés par ordinateur, et à concevoir des programmes de massage permettant d'adapter le traitement à la pathologie rencontrée par le thérapeute. Selon cette évolution, les cellules ne sont plus gonflées selon un ordre immuable suivant la direction disto-proximale, mais selon un ordre quelconque programmé et présélectionné en fonction de la pathologie rencontrée, et les appareils de massage ainsi conçus s'avèrent efficaces pour le traitement de nombreuses pathologies.

Toutefois, tous les appareils de massage conçus selon cette première technique présentent l'inconvénient majeur de constituer des systèmes complexes, encombrants et d'utilisation peu pratique, essentiellement en raison de la présence des nombreux conduits pneumatiques nécessaires (un par cellule gonflable) et de la complexité de l'installation de distribution destinée à assurer les séquences de gonflage désirées.

La deuxième solution technique, décrite dans le brevet EP 320.767 a visé à pallier l'inconvénient ci-dessus évoqué, et à fournir des appareils de massage possédant un nombre de conduits réduits et des moyens de distribution beaucoup plus simples. A cet effet, ces appareils de massage comprennent principalement :
- des moyens de distribution d'un fluide de gonflage,
- des moyens de distribution d'un fluide de commande,
- des distributeurs associés aux cellules gonflables et recevant les fluides de gonflage et de commande, chaque distributeur comportant une membrane agencée pour permettre le passage du fluide de gonflage vers l'aval lorsque la pression locale de gonflage atteint une valeur fonction de la pression du fluide de commande.

Un tel appareil de massage comporte uniquement un conduit de gonflage et un conduit de commande, et ce quel que soit le nombre de cellules gonflables, et présente donc une structure notablement simplifiée par rapport aux appareils de massages dotés d'un conduit par cellule.

Toutefois, selon cette conception, les cellules de l'accessoire de traitement sont gonflées en cascade les unes après le autres, selon un ordre immuable, et de tels appareils de massage n'offrent donc qu'une gamme restreinte de programmes de massage.

La présente invention vise à pallier les inconvénients des appareils de massage actuels ci-dessus décrits et a pour principal objectif de fournir un appareil de massage possédant un nombre de conduits réduits et des moyens de distribution de conception simple, et offrant la possibilité de mettre en oeuvre des traitements variés adaptés à la pathologie rencontrée.

Un autre objectif de l'invention est de fournir un appareil autorisant, de façon très souple, un réglage permanent des caractéristiques du massage (valeur des pressions, ...).

A cet effet, l'appareil conforme à l'invention pour exécuter un massage de parties du corps par pressions cycliques comprend en combinaison :
- au moins un accessoire de traitement composé de n cellules gonflables juxtaposées adaptées pour être disposées au contact de la partie du corps à masser,
- une source d'air comprimé reliée à une ligne pneumatique, dite de gonflage, dotée de moyens de régulation de pression pour l'obtention d'une pression de gonflage Pg,
- un conduit de gonflage raccordé à la ligne pneumatique de gonflage et associé à l'accessoire de traitement pour s'étendre le long et à proximité des cellules gonflables,
- n distributeurs électro-pneumatiques interposés sur le conduit de gonflage au niveau des cellules de gonflages, chaque distributeur associé à une cellule comprenant :
   * un orifice amont connecté au conduit de gonflage côté amont,
   * un orifice aval connecté au conduit de gonflage côté aval,
   * un orifice de gonflage connecté à la cellule de gonflage et communiquant avec les orifices amont et aval,
   * un actionneur à commande électrique doté d'un obturateur de forme adaptée pour obturer l'orifice de gonflage, ledit actionneur étant apte à présenter deux états :
      . un état, dit de fermeture du distributeur, dans lequel l'orifice de gonflage est obturé, et les orifices amont et aval en communication,
      . et un état, dit d'ouverture du distributeur, dans lequel les orifices amont, aval et de gonflage sont en communication,
- une ligne d'alimentation électrique associée à l'accessoire de traitement pour s'étendre le long et à proximité des cellules de gonflage, et comportant n conducteurs électriques connectés chacun à l'actionneur d'un distributeur,
- et une unité de pilotage programmable adaptée pour asservir les actionneurs des distributeurs de façon à positionner ces derniers dans leur état de fermeture ou d'ouverture selon des séquences prédéfinies.

En premier lieu, quel que soit le nombre de cellules gonflables, l'appareil comprend uniquement un conduit de gonflage et une ligne d'alimentation électrique. De plus, lors de la distribution du fluide de gonflage, l'intégralité de la conduite de gonflage est alimentée et reçoit la pression de gonflage Pg, du fait que les orifices amont et aval de l'ensemble des distributeurs sont en communication quel que soit l'état, ouvert ou fermé, desdits distributeurs. De ce fait, n'importe quelle cellule peut être gonflée et ce quelle que soit sa position, par commande de l'ouverture de l'orifice de gonflage du distributeur associé. Dans la pratique, moyennant l'élaboration de programmes de massage adaptés, un tel appareil de massage autorise ainsi la mise en oeuvre de traitements variés fonction des pathologies rencontrées, au cours desquels notamment :
- l'ordre de gonflage des cellules peut être absolument quelconque,
- une ou plusieurs cellules peuvent être gonflées simultanément,
- les cellules sous pression peuvent être maintenues gonflées jusqu'à la fin du cycle, ou dégonflées préalablement au gonflage d'une ou d'autres cellules suivantes,
- le temps de gonflage des cellules peut être variable,
- ....

Plusieurs accessoires de traitement peuvent, le cas échéant, être disposés en série en vue d'être gonflés successivement ou simultanément, par exemple une cuissarde et une ceinture abdominale. De même, plusieurs accessoires peuvent être disposés en parallèle de sorte que leurs cellules soient gonflées de façon synchrone ou non, par exemple deux cuissardes destinées à s'appliquer autour des membres inférieurs. L'invention peut être appliquée quel que soit le type d'accessoire : accessoire à cellules situées bout-à-bout, accessoire à cellules agencées en écailles, ...

Selon un mode de réalisation préférentiel, les actionneurs des distributeurs consistent en des électro-aimants dotés d'une armature mobile de forme adaptée pour faire office d'obturateur de l'orifice de gonflage desdits distributeurs.

Selon une autre caractéristique de l'invention, les moyens de régulation de pression comprennent un capteur de pression interposé sur la ligne de gonflage de façon à mesurer la pression dans ladite ligne de gonflage, et adapté, lors de l'obtention d'une pression de gonflage Pgc, dite de coupure, prédéfinie, pour commander l'arrêt de la distribution d'air comprimé et pour délivrer un signal d'information de coupure vers l'unité de pilotage. L'unité de pilotage est alors, en outre, programmée, lors du gonflage des cellules, pour délivrer vers le capteur de pression un signal représentatif de la pression de gonflage de coupure Pgc désirée, et pour commander la fermeture de chaque distributeur en état d'ouverture lors de la réception du signal d'information de coupure délivré par ledit capteur de pression.

De tels moyens de régulation permettent, en effet, notamment, d'ajuster de façon indépendante la pression de gonflage de chaque cellule.

L'appareil de massage comporte, en outre, préférentiellement, une électro-vanne à deux voies disposée sur la ligne de gonflage, dont l'ouverture et la fermeture sont commandées par l'unité de pilotage, en vue de permettre de réaliser une mise à l'air libre pour le dégonflage de chaque cellule ou de l'ensemble des cellules en fin de cycle.

Par ailleurs, selon un mode de réalisation préféré, chaque distributeur associé à une cellule gonflable comprend un compartiment de forme adaptée pour loger l'électro-aimant et une chambre ménagée de façon à autoriser les déplacements axiaux de l'armature mobile dudit électro-aimant et avec laquelle communiquent les orifices amont, aval et de gonflage, ledit orifice de gonflage étant ménagé axialement par rapport à l'armature mobile de façon à pouvoir être obturé par cette dernière.

De plus, la chambre de chacun de ces distributeurs présente avantageusement une section inférieure à celle du compartiment dudit distributeur, et est séparée de ce compartiment par un épaulement formant une portée d'appui de l'électro-aimant.

De tels distributeurs de structure très simple et peu encombrants peuvent être assujettis sans difficulté sur les cellules gonflables.

D'autres caractéristiques, buts et avantages de l'invention ressortiront de la description détaillée qui suit en référence aux dessins annexés qui en représentent à titre d'exemple. non limitatif un mode de réalisation préférentiel. Sur ces dessins qui font partie intégrante de la présente description :
- la figure 1 est une vue schématique d'ensemble d'un appareil de traitement conforme à l'invention destiné à assurer le massage d'un membre inférieur,
- la figure 2 en est une vue schématique partielle,
- les figures 3a et 3b sont des vues en coupe d'un distributeur associé à une cellule gonflable, respectivement en position fermée et en position ouverte.

L'appareil de massage représenté à titre d'exemple aux figures comprend essentiellement :
- un accessoire de massage 1 adapté pour être appliqué autour d'une jambe,
- un conduit de gonflage 2 s'étendant le long et à proximité de l'accessoire de massage 1,
- une pluralité de distributeurs électro-pneumatiques tels que 3 interposés sur ce conduit de gonflage 2, et assujettis sur l'accessoire de massage 1,
- une ligne 4 d'alimentation électrique en basse tension des distributeurs 3 s'étendant le long et à proximité de l'accessoire de massage 1, et comportant, pour chacun desdits distributeurs, un conducteur connecté à ce dernier,
- et une unité programmable 5 de distribution d'air comprimé et de pilotage des distributeurs 3.

L'accessoire de massage 1 est en particulier du type de celui décrit dans le brevet FR 85.09764 comprenant deux parois souples 6, 7 qui sont solidarisées entre elles pour former plusieurs logements juxtaposés dans lesquels sont insérées des poches gonflables étanches 8 en un matériau élastique. La forme de l'ensemble de cellules 8 ainsi constituées est adaptée pour pouvoir se refermer autour du membre à traiter et épouser les contours de celui-ci, des sangles 9, lanières ou moyens équivalents (partiellement représentés) étant prévus pour le maintien de l'accessoire 1 autour du membre.

Bien entendu, tout autre type d'accessoire peut être prévu dans le dispositif de l'invention (en particulier accessoires à cellules agencées en écailles). De même, l'accessoire peut simplement être constitué par deux parois localement soudées pour former les cellules.

Les distributeurs électro-pneumatiques 3 sont, en l'exemple, disposés dans l'alignement les uns des autres au voisinage d'un bord longitudinal de l'accessoire de massage 1.

Un distributeur 3 est assujetti sur chaque cellule 8 de façon à permettre le gonflage de celle-ci.

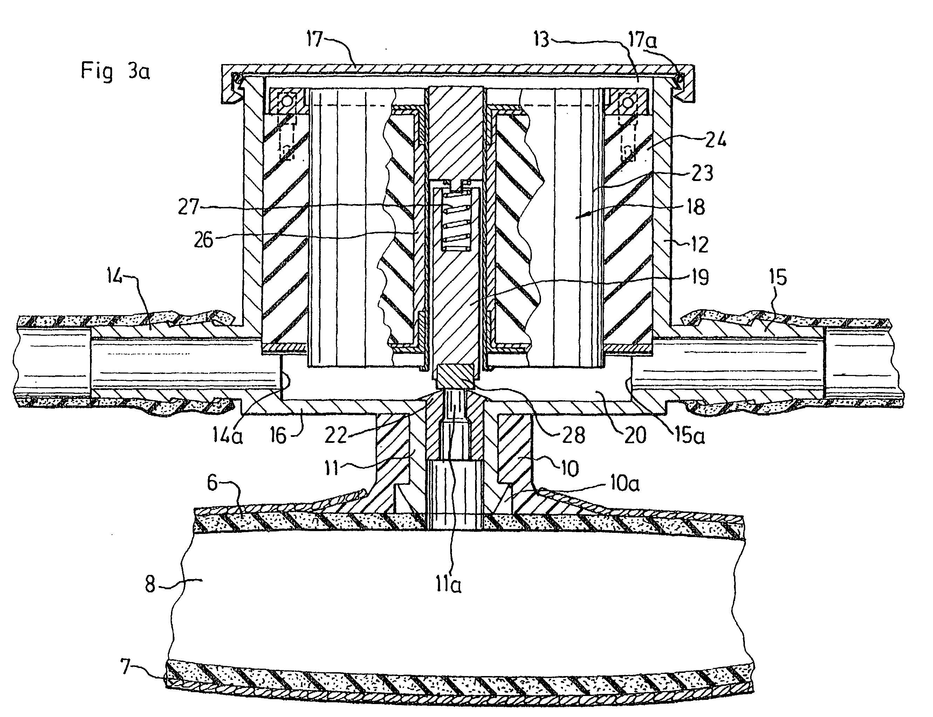

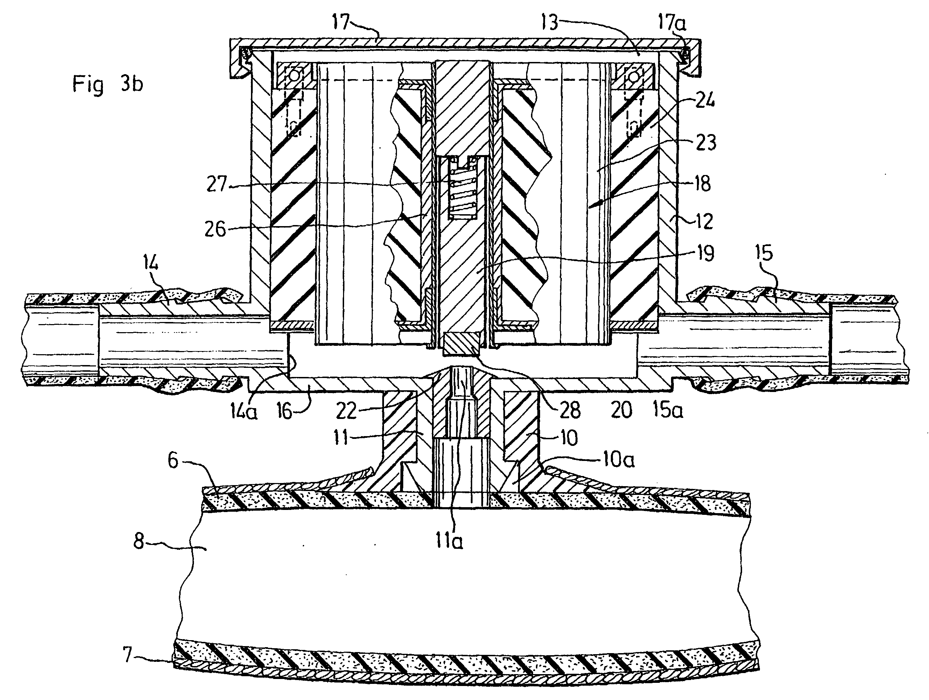

Comme l'illustrent les figures 3a et 3b, ces distributeurs 3 peuvent en particulier être étanchément fixés sur une face des cellules gonflables ; en l'exemple, cette fixation est réalisée grâce à une pièce de renfort 10, dite tétine, qui est collée sur la paroi souple de la cellule. Cette tétine 10 comporte un logement 10a à tête élargie dans lequel vient s'encliqueter de façon étanche un embout de gonflage 11 du distributeur 3.

Chaque distributeur 3 en forme générale de T est en l'exemple composé d'un corps creux 12 délimitant un compartiment 13, et comprend trois branches tubulaires : une branche amont 14, une branche aval 15 située dans l'alignement de la branche amont 14, et une branche de gonflage 11 orthogonale aux deux autres. Ces branches 11, 14, 15 sont moulées d'un seul tenant avec le corps 12 (le cas échéant, elles peuvent être rapportées et collées sur celui-ci).

En premier lieu, le corps creux 12 présente une paroi frontale 16 dans laquelle débouche axialement la branche de gonflage 11. Il présente, à l'opposé de la paroi frontale 16, une face frontale ouverte obturée par un couvercle 17 qui en l'exemple vient s'encliqueter sur ledit corps creux, avec interposition entre ces derniers d'un joint d'étanchéité 17a.

Le compartiment 13 présente sur sa plus grande hauteur, une section conjuguée de celle d'un électro-aimant 18 doté d'une armature mobile 19, adaptée pour loger ce dernier, et une hauteur supérieure à celle dudit électro-aimant adaptée pour délimiter une chambre 20 entre la base de ce dernier et la paroi frontale 16.

De plus, cette chambre 20 présente une section inférieure à celle de la partie courante du compartiment 13 et est séparée de cette dernière par un épaulement 21 sur lequel vient reposer l'électro-aimant 18.

Les branches tubulaires amont 14 et aval 15 forment quant à elles des embouts de jonction mâles (délimitant les orifices amont 14a et aval 15a) communiquant avec la chambre 20 du corps creux 12.

De même, la branche tubulaire de gonflage 11 forme un embout de jonction mâle. De plus, cette branche tubulaire de gonflage 11 débouche dans la chambre 20 par un orifice de gonflage 11a entouré d'une portée 22 formant un siège d'appui de l'armature mobile 19 de l'électro-aimant 18.

L'électro-aimant 18 logé dans le corps creux 12 est quant à lui de type classique et comporte une bobine magnétique 23 fixée à l'intérieur d'une culasse 24, et une armature mobile 19 apte à se déplacer axialement à l'intérieur d'un tube de guidage 26 logé dans la bobine 23, et sollicitée par un ressort 27 agencé pour la repousser vers l'extérieur dudit tube de guidage. De plus, cette armature mobile 19 est dotée, au droit de son extrémité libre, d'un joint d'étanchéité 28.

En position repos, le ressort 27 presse le joint d'étanchéité 28 contre la portée 22 de l'embout de gonflage 11, de sorte que l'orifice de gonflage 11a se trouve obturé tandis que les orifices amont 14a et aval 15a sont en communication.

Lorsque l'électro-aimant 18 est mis sous tension, l'armature mobile 25 est par contre attirée à l'intérieur de la bobine magnétique 23, et s'éloigne de la portée 22. Le fluide de gonflage est alors délivré à l'intérieur de la cellule 8 associée au distributeur 3, tandis que les orifices amont 14a et aval 15a sont toujours en communication.

La pression de gonflage Pg régnant dans l'ensemble du conduit de gonflage 2, les cellules 8 peuvent ainsi être gonflées les unes après les autres, dans un ordre quelconque. De même, il peut être procédé au gonflage simultané de deux ou plusieurs cellules 8 et ce quelle que soit la position de ces dernières le long de l'appareil de massage.

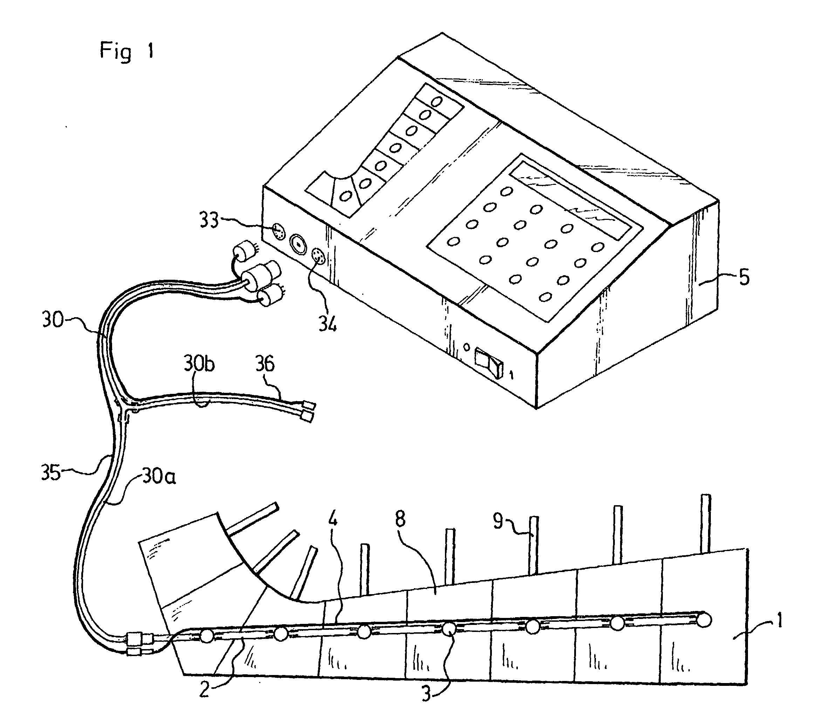

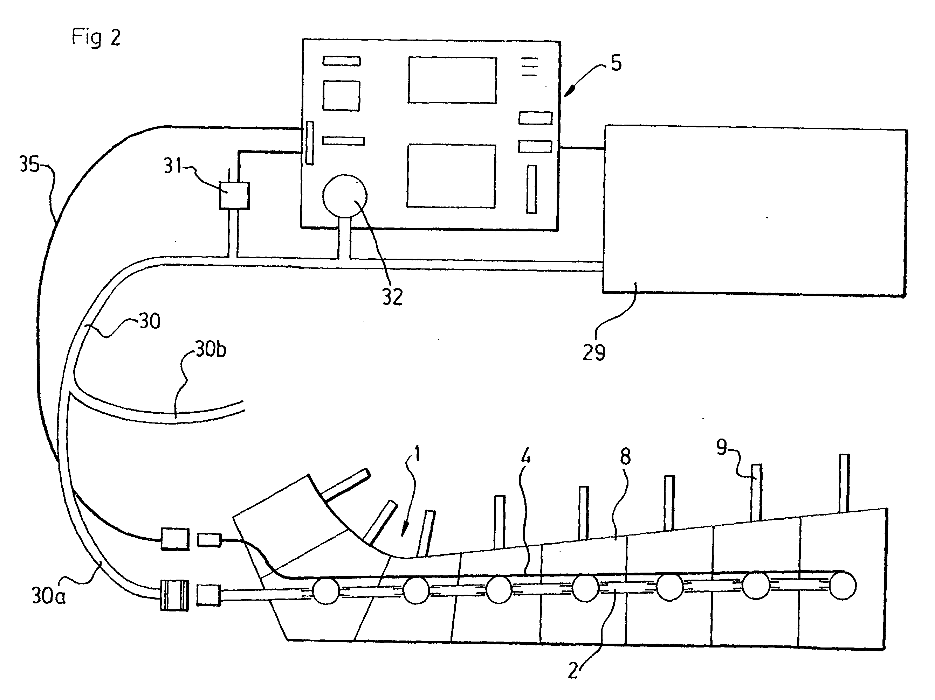

Le conduit de gonflage 2 est raccordé par une ligne de gonflage 30 à l'unité 5 comportant des moyens de distribution du fluide de gonflage. Tel que représenté à la figure 2, un compresseur 29 alimente directement en air comprimé basse pression (par exemple 150 mb) cette ligne de gonflage 30 qui comporte, en l'exemple, deux conduits parallèles 30a, 30b permettant de connecter simultanément deux accessoires de massage 1 (dont un seul est représenté aux figures 1 et 2). A cet effet, en outre, l'unité de pilotage 5 comprend également deux connecteurs 33, 34 permettant d'alimenter électriquement les accessoires de massage 1, chacun au moyen d'un câble électrique 35, 36.

Cette ligne de gonflage 30 à laquelle est raccordé le conduit de gonflage 2, comprend essentiellement une électrovanne 31 du type à deux voies pour permettre une mise à l'air libre du conduit de gonflage, et un capteur de pression 32.

En l'exemple, le conduit de gonflage 2 est obturé à son extrémité située en aval de la dernière cellule gonflable de sorte que le dégonflage s'effectue en fin de séquence par l'électrovanne 31.

L'électrovanne 31 est asservie à l'unité programmable de pilotage 5 adaptée pour commander cycliquement l'ouverture et la fermeture de celle-ci (c'est-à-dire autoriser la mise en pression du conduit 2 et permettre sa mise à l'air libre).

Le capteur de pression 32 est également asservi à l'unité de pilotage 5 adaptée pour délivrer vers ce dernier un signal représentatif d'une pression de gonflage de coupure Pgc désirée dans la ligne de gonflage 30, et par conséquent, dans chaque cellule 8 en cours de gonflage. Ce capteur de pression 32 est également adapté pour délivrer un signal d'information de coupure lors de l'obtention de la pression de coupure Pgc, à la réception duquel l'unité de pilotage 5 est programmée pour commander la fermeture de chaque distributeur 3 en état d'ouverture.

Le capteur de pression 32 est enfin connecté électriquement, via l'unité de pilotage 5, au compresseur 29 de façon à commander l'arrêt de ce dernier lors de l'obtention de la pression de coupure Pgc dans la ligne de gonflage 30.

## Revendications

1. Appareil de massage de parties du corps par pressions cycliques, comprenant en combinaison :
- au moins un accessoire de traitement (1) composé d'une pluralité de cellules gonflables juxtaposées (8) adaptées pour être disposées au contact de la partie du corps à masser,
- une source (29) d'air comprimé reliée à une ligne pneumatique (30), dite de gonflage, dotée de moyens (32) de régulation de pression pour l'obtention d'une pression de gonflage,
- un conduit de gonflage (2) raccordé à la ligne pneumatique de gonflage (30) et associé à l'accessoire de traitement (1) pour s'étendre le long et à proximité des cellules gonflables (8),
- une pluralité de distributeurs électro-pneumatiques (3) interposés sur le conduit de gonflage (30) au niveau des cellules de gonflages (8), chaque distributeur associé à une cellule (8) comprenant :
* un orifice amont (14a) connecté au conduit de gonflage (30) côté amont,
* un orifice aval (15a) connecté au conduit de gonflage (30) côté aval,
* un orifice de gonflage (11a) connecté à la cellule de gonflage (8) et communiquant avec les orifices amont (14a) et aval (15a),
* un actionneur (18) à commande électrique doté d'un obturateur (25) de forme adaptée pour obturer l'orifice de gonflage (11a), ledit actionneur étant apte à présenter deux états :
. un état, dit de fermeture du distributeur (3), dans lequel 'orifice de gonflage (11a) est obturé, et les orifices amont (14a) et aval (15a) en communication,
. et un état, dit d'ouverture du distributeur (3), dans lequel les orifices amont (14a), aval (15a) et de gonflage (11a) sont en communication,
- une ligne (4) d'alimentation électrique associée à l'accessoire de traitement (1) pour s'étendre le long et à proximité des cellules de gonflage (8), et comportant une pluralité de conducteurs électriques connectés chacun à l'actionneur (18) d'un distributeur (3),
- et une unité de pilotage programmable (5) adaptée pour asservir les actionneurs (18) des distributeurs (3) de façon à positionner ces derniers dans leur état de fermeture ou d'ouverture selon des séquences prédéfinies.

2. Appareil de massage selon la revendication 1, **caractérisé en ce que** les actionneurs des distributeurs (3) consistent en des électro-aimants (18) dotés d'une armature mobile (19) de forme adaptée pour faire office d'obturateur de l'orifice de gonflage (11a) desdits distributeurs.

3. Appareil de massage selon l'une des revendications 1 ou 2, **caractérisé en ce que** :
- les moyens de régulation de pression comprennent un capteur de pression (32) interposé sur la ligne de gonflage (30) de façon à mesurer la pression dans ladite ligne de gonflage, et adapté, lors de l'obtention d'une pression de gonflage, dite de coupure, prédéfinie, pour commander l'arrêt de la distribution d'air comprimé et pour délivrer un signal d'information de coupure vers l'unité de pilotage (5),
- l'unité de pilotage (33) est programmée, lors du gonflage des cellules (8), pour délivrer vers le capteur de pression (32) un signal représentatif de la pression de gonflage de coupure désirée, et pour commander la fermeture de chaque distributeur (3) en état d'ouverture lors de la réception du signal d'information de coupure délivré par ledit capteur de pression.

4. Appareil de massage selon l'une des revendications 1 à 3, **caractérisé en ce qu'**il comprend une électro-vanne à deux voies (31) disposée sur la ligne de gonflage (30) dont l'ouverture et la fermeture sont commandées par l'unité de pilotage (5).

5. Appareil de massage selon la revendication 2, **caractérisé en ce que** chaque distributeur (3) comprend un compartiment (13) de forme adaptée pour loger l'électro-aimant (18), et une chambre (20) ménagée de façon à autoriser les déplacements axiaux de l'armature mobile (19) dudit électro-aimant et avec laquelle communiquent les orifices amont (14a), aval (15a) et de gonflage (11a), ledit orifice de gonflage étant ménagé axialement par rapport à l'armature mobile (25) de façon à pouvoir être obturé par cette dernière.

6. Appareil de massage selon la revendication 5, **caractérisé en ce que** la chambre (20) de chaque distributeur (3) présente une section inférieure à celle du compartiment (13) dudit distributeur, et est séparée de ce compartiment par un épaulement (21) formant une portée d'appui de l'électro-aimant (18).

## Claims

1. A device for massaging parts of the body by means of cyclical pressures, comprising in combination:
- at least one treatment accessory (1), consisting of a plurality of juxtaposed inflatable cells (8), which can be disposed in contact with the part of the body to be massaged;
- a compressed air source (29), which is connected to a pneumatic line (30), known as the inflation line, and is provided with pressure regulation means (32) in order to obtain an inflation pressure;
- an inflation tube (2) which is connected to the pneumatic inflation line (30), and is associated with the treatment accessory (1), in order to extend along, and in the vicinity of the inflatable cells (8);
- a plurality of electro-pneumatic distributors (3), which are interposed on the inflation tube (30) in the position of the inflation cells (8), each distributor associated with a cell (8) comprising:
* an upstream aperture (14a), which is connected to the inflation tube (30) on the upstream side;
* a downstream aperture (15a), which is connected to the inflation tube (30) on the downstream side;
* an inflation aperture (11a) which is connected to the inflation cell (8), and communicates with the apertures upstream (14a) and downstream (15a);
* an electrically controlled actuator (18), which is provided with a shutter (25) which has a shape designed to close the inflation aperture (11a), the said actuator being able to assume two states:
. one state, known as the closed state of the distributor (3), in which the inflation aperture (11a) is shut, and the apertures upstream (14a) and downstream (15a) communicate; and
. one state, known as the open state of the distributor (3), in which the apertures upstream (14a), downstream (15a) and for inflation (11a) communicate;
- an electric supply line (4), which is associated with the treatment accessory (1), in order to extend along and in the vicinity of the inflation cells (8), and comprises a plurality of electric conductors, each of which is connected to the actuator (18) of a distributor (3); and
- a programmable piloting unit (5), which can control the actuators (18) of the distributors (3), such as to position the latter in their closed or open state, according to pre-defined sequences.

2. Massaging device according to claim 1, **characterised in that** the actuators of the distributors (3) consist of electromagnets (18), which are provided with a movable armature (19) which has a shape such that it can act as a shutter for the inflation aperture (11a) of the said distributors.

3. Massaging device according to claim 1 or 2, **characterised in that**:
- the pressure regulation means comprise a pressure sensor (32) which is interposed on the inflation line (30), such as to measure the pressure in the said inflation line, and when a pre-determined inflation pressure, known as the cut-off pressure, is reached, can command stoppage of distribution of compressed air, and transmit a cut-off information signal to the piloting unit (5);
- the piloting unit (33) is programmed, during inflation of the cells (8), to transmit to the pressure sensor (32) a signal which is representative of the required cut-off inflation pressure, and to command closure of each distributor (3) which is in an open state, during receipt of the cut-off information signal transmitted by the said pressure sensor.

4. Massaging device according to any of claims 1 to 3, **characterised in that** it comprises a two-way solenoid valve (31), which is disposed on the inflation line (30), opening and closure of which are commanded by the piloting unit (5).

5. Massaging device according to claim 2, **characterised in that** each distributor (3) comprises a compartment (13) which has a shape designed to accommodate the electromagnet (18), and a chamber (20) which is disposed such as to permit axial displacements of the movable armature (19) of the said electromagnet, and with which the apertures upstream (14a), downstream (15a) and for inflation (11a) communicate, the said inflation aperture being disposed axially relative to the movable armature (25), such that it can be shut by the latter.

6. Massaging device according to claim 5, **characterised in that** the chamber (20) of each distributor (3) has a cross-section which is smaller than that of the compartment (13) of the said distributor, and is separated from this compartment by a shoulder (21) which forms a support surface for the electromagnet (18).

## Patentansprüche

1. Vorrichtung zum Massieren von Körperteilen durch zyklische Druckeinwirkung, die in Kombination Folgendes umfasst:
- wenigstens ein Behandlungszubehörteil (1), das sich aus einer Mehrzahl von nebeneinander liegenden aufblasbaren Zellen (8) zusammensetzt, die so gestaltet sind, dass sie mit dem zu massierenden Körperteil in Kontakt gebracht werden,
- eine Druckluftquelle (29), die mit einer Aufblasdruckluftleitung (30) verbunden ist, die mit Druckregelungsmitteln (32) zum Erzeugen eines Aufblasdrucks ausgestattet sind,
- eine Aufblasrohrleitung (2), die an die Aufblasdruckluftleitung (30) angeschlossen und mit dem Behandlungszubehörteil (1) assoziiert ist und entlang und in der Nähe der aufblasbaren Zellen (8) verläuft,
- eine Mehrzahl von elektropneumatischen Verteilern (3), die jeweils auf der Aufblasrohrleitung (30) in der Höhe der Aufblaszellen (8) angeordnet sind, wobei jeder Verteiler mit einer Zelle (8) assoziiert ist, umfassend:
* eine stromaufwärtige Öffnung (14a), die auf der stromaufwärtigen Seite mit der Aufblasrohrleitung (30) verbunden ist,
* eine stromabwärtige Öffnung (15a), die auf der stromabwärtigen Seite mit der Aufblasrohrleitung (30) verbunden ist,
* eine Aufblasöffnung (11a), die mit der Aufblaszelle (8) verbunden ist und mit der stromaufwärtigen (14a) und der stromabwärtigen (15a) Öffnung kommuniziert,
* ein elektrisches Steuerstellglied (18), das mit einer Verschlussvorrichtung (25) in einer Form ausgestattet ist, die so gestaltet ist, dass sie die Aufblasöffnung (11a) verschließt, wobei das genannte Stellglied zwei Zustände einnehmen kann:
. einen Verteilerverschlusszustand (3), in dem die Aufblasöffnung (11a) verschlossen ist und die stromaufwärtige (14a) und die stromabwärtige (15a) Öffnung in Verbindung sind,
. und einen Verteileröffnungszustand (3), in dem die stromaufwärtige (14a), die stromabwärtige (15a) Öffnung und die Aufblasöffnung (11a) miteinander in Verbindung sind,
- eine Stromversorgungsleitung (4), die mit dem Behandlungszubehörteil (1) assoziiert ist und entlang und in der Nähe der Aufblaszellen (8) verläuft und eine Mehrzahl von elektrischen Leitern aufweist, die jeweils mit dem Stellglied (18) eines Verteilers (3) verbunden sind,
- und ein programmierbares Steuergerät (5), das so gestaltet ist, dass es die Stellglieder (18) der Verteiler (3) so ansteuert, dass die Letzteren gemäß vordefinierter Folgen in ihren Verschluss- oder ihren Öffnungszustand gebracht werden.

2. Massagevorrichtung nach Anspruch 1, **dadurch gekennzeichnet, dass** die Stellglieder der Verteiler (3) aus Elektromagneten (18) bestehen, die mit einem beweglichen Anker (19) ausgestattet sind, der so gestaltet ist, dass er als Verschlussvorrichtung für die Aufblasöffnung (11a) der genannten Verteiler dient.

3. Massagevorrichtung nach Anspruch 1 oder 2, **dadurch gekennzeichnet, dass**:
- die Druckregelungsmittel einen Drucksensor (32) umfassen, der so in der Aufblasleitung (30) montiert ist, dass er den Druck in der genannten Aufblasleitung misst, und der die Aufgabe hat, nach dem Erreichen eines vordefinierten Abtrennaufblasdrucks einen Befehl zum Unterbrechen der Verteilung von Druckluft zu geben und ein Abtrenninformationssignal zum Steuergerät (5) zu senden,
- das Steuergerät (33) so programmiert ist, dass es beim Aufblasen der Zellen (8) ein Signal zum Drucksensor (32) sendet, das für den gewünschten Abtrennaufblasdruck repräsentativ ist, und das Schließen jedes Verteilers (3) im Öffnungszustand anweist, wenn das Abtrenninformationssignal empfangen wird, das von dem genannten Drucksensor gesendet wird.

4. Massagevorrichtung nach einem der Ansprüche 1 bis 3, **dadurch gekennzeichnet, dass** sie ein Zweiweg-Elektroventil (31) umfasst, das auf der Aufblasleitung (30) angeordnet ist und dessen Öffnen und Schließen vom Steuergerät (5) gesteuert wird.

5. Massagevorrichtung nach Anspruch 2, **dadurch gekennzeichnet, dass** jeder Verteiler (3) einen Raum (13), der so gestaltet ist, dass er den Elektromagnet (18) aufnimmt, und eine Kammer (20) umfasst, die so gestaltet ist, dass sie die axialen Verschiebungen des beweglichen Ankers (19) des genannten Elektromagnets zulässt, und mit der die stromaufwärtige (14a) und die stromabwärtige (15a) Öffnung sowie die Aufblasöffnung (11a) kommunizieren, wobei die genannte Aufblasöffnung axial in Bezug auf den beweglichen Anker (25) so gestaltet ist, dass sie vom Letzteren verschlossen werden kann.

6. Massagevorrichtung nach Anspruch 5, **dadurch gekennzeichnet, dass** die Kammer (20) jedes Verteilers (3) einen Querschnitt hat, der kleiner ist als der des Raums (13) des genannten Verteilers, und dass sie von diesem Raum durch einen Ansatz (21) getrennt ist, der ein Widerlager des Elektromagneten (18) bildet.
